# FASCICULE DE BREVET EUROPEEN

(11) **EP 3 643 167 B1**
(45) Date de publication et mention de la délivrance du brevet: **19.05.2021**
(21) Numéro de dépôt: 19204822.1
(22) Date de dépôt: 23.10.2019
(51) Int. Cl.: A01K 1/06

(54) **SYSTEME DE CONTENTION POUR BETAIL COMPRENANT UN COULOIR DE PASSAGE**
RÜCKHALTESYSTEM FÜR VIEH, DAS EINEN DURCHGANG MIT EINSCHLIESST
SYSTEM FOR LIVESTOCK CONTAINMENT COMPRISING AN AISLE

(30) Priorité: 26.10.2018 FR 1859972
(43) Date de publication de la demande: 29.04.2020
(73) Titulaire: Tubex, 45300 Escrennes (FR)
(72) Inventeur: JOURDAIN, Dominique, 45300 Escrennes (FR)
(74) Mandataire: Cabinet Beau de Loménie

(56) Documents cités:
- EP-A1- 2 921 133
- US-A- 3 370 835
- US-A- 3 760 768
- US-A1- 2009 064 941
- US-A1- 2012 000 433

## Description

### DOMAINE TECHNIQUE

Le présent exposé se rapporte à un système de contention pour le bétail.

### ARRIERE-PLAN TECHNOLOGIQUE

Il est connu des systèmes de contention pour le bétail formant un couloir de passage pour le bétail. Ce couloir de passage à généralement une largeur prédéterminée adaptée à la corpulence des animaux devant emprunter ce couloir, de façon à ce que les animaux le parcourent les uns après les autres. Toutefois, l'utilisation d'un tel système de contention n'est pas adaptée pour des animaux ayant une corpulence différente, par exemple des animaux d'une autre race ou bien de jeunes animaux n'ayant pas atteint leur taille adulte.

Des systèmes de contention à largeur réglable ont été conçus afin de pouvoir s'adapter à plusieurs corpulences d'animaux. Toutefois, des éléments de montage du système de contention réglable en largueur ont des formes pouvant blesser les animaux empruntant le couloir de passage. US2009/064941 divulgue un système de contention pour bétail selon le préambule de la revendication 1. US 3 370 835 et EP2 921 133 divulguent également des systèmes de contention pour bétail.

### PRESENTATION

Le présent exposé a pour but de résoudre tout ou partie des inconvénients mentionnés ci-dessus.

A cet effet, le présent exposé concerne un système de contention pour bétail selon la revendication 1.

Ainsi, l'agencement de carter de protection permet de couvrir au moins en partie les éléments blessants formés par certains éléments de montage des parois latérales sur le montant, ou des portions du montant. Ainsi, le contact direct du bétail avec les parties du montant et des éléments de montages qui sont recouvertes est évité.

On comprend qu'au moins la première paroi latérale est configurée pour élargir ou resserrer le couloir de passage.

Les première et deuxième parois latérales forment donc un premier côté du couloir de passager et peuvent être sensiblement alignées.

On comprend que le montant et les éléments de montage sont disposés en retrait de l'agencement de carter de protection, vu depuis l'intérieur du couloir de passage. L'agencement de carter de protection fait donc saillie vers l'intérieur du passage.

Toutefois, l'agencement de carter de protection fait saillie sur une distance suffisamment faible pour que la diminution de la largeur du couloir de passage en résultant soit faible voire négligeable, dans n'importe quelle position d'au moins la première paroi latérale.

Dans la mesure où l'agencement de carter de protection est déformable de façon à accompagner le déplacement d'au moins la première paroi latérale selon la largeur, l'agencement de carter de protection continue recouvrir les parties du montant et des éléments de montage afin d'éviter le contact direct du bétail empruntant le couloir de passage avec ces parties, lorsque la première paroi latérale est déplacée.

L'agencement de carter de protection comprend au moins une première portion reliée à la première paroi latérale et une deuxième portion reliée à la deuxième paroi latérale, les première et deuxième portions étant reliées et mobiles l'une par rapport à l'autre.

Ainsi, l'agencement de carter de protection est simple à réaliser et a un coût de fabrication et de montage faible tout en permettant d'éviter le contact direct du bétail empruntant le couloir de passage avec les parties du montant et des éléments de montage recouvertes par l'agencement de carter de protection.

Dans certains modes de réalisation, l'agencement de carter de protection est fixé d'une part à la première paroi latérale et d'autre part à la deuxième paroi latérale.

L'agencement de carter de protection est donc mobile et continue de recouvrir les parties du montant et des éléments de montage afin d'éviter le contact direct du bétail empruntant le couloir de passage avec ces parties, lorsque la première paroi latérale est déplacée.

On comprend que le carter de protection peut être en matière souple et/ou élastique, et/ou peut comprendre plusieurs éléments reliés les uns aux autres et/ou mobiles les uns par rapport aux autres.

Dans certains modes de réalisation, une partie de l'agencement de carter protection étant la plus avancée dans le couloir de passage selon la largeur est avancée par rapport à au moins la première paroi d'une distance maximum de 70 mm, de préférence d'une distance maximum de 40 mm, dans une configuration dans laquelle les première et deuxième parois latérales sont alignées.

Dans certain mode de réalisation, la partie de l'agencement de carter de protection la plus en saillie réduit la largeur du couloir de passage de moins de 10%.

Ainsi, la distance sur laquelle l'agencement de carter de protection fait saillie est faible et négligeable par rapport à la largeur du passage tout en permettant d'éviter le contact direct du bétail empruntant le couloir de passage avec les parties du montant et des éléments de montage recouvertes par l'agencement de carter de protection.

Par exemple, la plus grande largeur du couloir de passage est comprise entre 700 et 900 mm, de préférence entre 750 et 850 mm.

Par exemple, la plus petite largeur du couloir de passage est comprise entre 400 et 600 mm, de préférence entre 450 et 650 mm.

Selon un exemple de réalisation, les première et deuxième portions sont rigides.

Selon un autre exemple de réalisation, l'agencement de carter de protection est souple. Dans le cas où l'agencement de carter de protection comprend les première et deuxième portions, les première et deuxième portions sont souples.

Par exemple, les première et deuxième portions sont des panneaux. Par exemple, les panneaux sont pleins, ou ajourés. Par exemple les première et deuxième portions comprennent une partie grillagée.

Par exemple, les première et deuxième portions se chevauchent.

Par exemple, les première et deuxième portions ont chacune une épaisseur comprise entre 2 et 10 mm.

Dans certains modes de réalisation, la première portion est reliée à la première paroi via une première liaison pivot et la deuxième portion est reliée à la deuxième paroi via une deuxième liaison pivot.

Ainsi, l'agencement de carter de protection est simple à réaliser et a un coût de fabrication et de montage faible tout en permettant d'éviter le contact direct du bétail empruntant le couloir de passage avec les parties du montant et des éléments de montage recouvertes par l'agencement de carter de protection..

Dans certains modes de réalisation, les première et deuxième portions sont reliées par une liaison glissière.

Ainsi, l'agencement de carter de protection est simple à réaliser et a un coût de fabrication et de montage faible tout en permettant d'éviter le contact direct du bétail empruntant le couloir de passage avec les parties du montant et des éléments de montage recouvertes par l'agencement de carter de protection.

Par exemple, la liaison glissière permet une modification de la longueur qui permet aux première et deuxième portions de modifier leur forme générale sans rupture.

Par exemple, la liaison glissière est formée par une première lumière oblongue ménagée dans la première portion, une deuxième lumière oblongue ménagée dans la deuxième portion et une tige insérée dans les première et deuxième lumières oblongues. L'assemblage des première et deuxième portions est donc simple à réaliser.

Dans certains modes de réalisation, l'agencement de carter de protection s'étend au moins le long des 2/3 de la hauteur du montant.

Ainsi, l'agencement de carter de protection s'étend sur la portion du montant au niveau de laquelle les animaux passent. Ainsi, le contact direct du bétail empruntant le couloir de passage avec les parties du montant et des éléments de montage recouvertes par l'agencement de carter de protection est évité et le coût de l'agencement de carter de protection est limité.

Dans certains modes de réalisation, la première paroi comprend un premier organe de coopération configuré pour coopérer avec un premier organe de maintien fixé au montant ; et dans lequel la deuxième paroi comprend un deuxième organe de coopération configurée pour coopérer avec un deuxième organe de montage, les organes de coopération et de montage formant les éléments de montage, la première portion est reliée au premier organe de coopération et la deuxième portion est reliée au deuxième organe de coopération.

Dans certains modes de réalisation, l'agencement de carter de protection comprend une bavette de protection configurée pour recouvrir au moins partiellement au moins la première paroi latérale.

Ainsi, l'agencement de carter de protection permet d'éviter le contact direct du bétail empruntant le couloir de passage avec des parties blessantes d'au moins la première paroi latérale, recouvertes par la bavette.

Par exemple, la bavette est disposée dans le prolongement de la première portion de façon à ce que la forme de l'agencement de carter de protection soit régulière, c'est-à-dire, de façon à ce que la forme de l'agencement de carter de protection ne présente pas d'arrête vive.

### BREVE DESCRIPTION DES DESSINS

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
- la figure 1 représente une vue d'ensemble en perspective du système de contention selon le présent exposé ;
- la figure 2 représente une vue en élévation de l'intérieur du couloir de passage, en particulier une vue rapprochée du rail de guidage ;
- les figures 3A et 3B représentent des vues rapprochées en perspective d'une partie du système de guidage ;
- la figure 4 une vue d'ensemble en perspective du système de contention comprenant l'agencement de carter de protection ;
- les figures 5A et 5B représentent une vue en perspective et une vue de dessus dans lesquelles la première et la deuxième paroi sont dans une position dans laquelle la largeur du couloir est la plus grande ;
- les figures 6A et 6B représentent une vue en perspective et une vue de dessus dans lesquelles la première paroi est déplacée de façon à diminuer la largeur du couloir de passage ;
- la figure 7 représente le système de contention dans une configuration dans laquelle lequel l'ouvrant de la première paroi latérale est ouvert.

### DESCRIPTION DETAILLEE

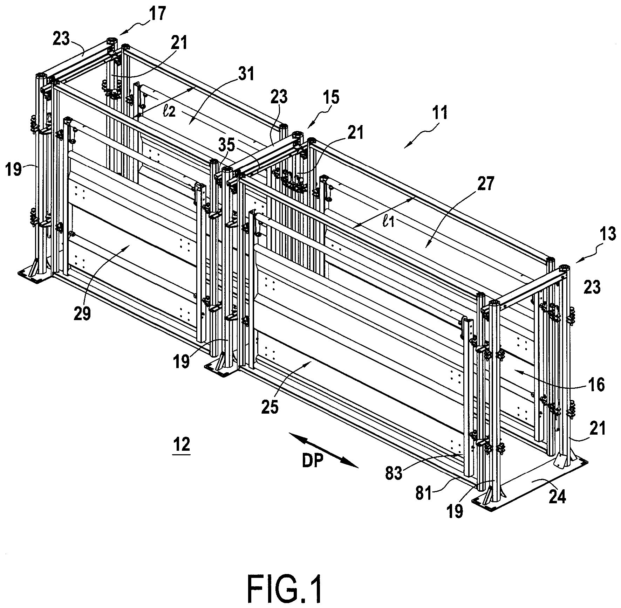

La figure 1 représente un système de contention 11 pour bétail. Le système de contention 11 comprend un couloir de passage 16 dans lequel les animaux sont amenés à se déplacer les uns après les autres dans une direction de déplacement DP. Le système de contention 11 est destiné à être installé sur un sol 12, naturel ou artificiel, d'une exploitation agricole.

Afin de former le couloir de passage 16, le système de contention 11 comprend ici une succession d'un premier, d'un deuxième et d'un troisième portique 13, 15, 17 respectivement, alignés selon la direction de déplacement DP.

Dans la description qui va suivre, les termes inférieur et supérieur sont utilisés en référence au système de contention 11, une fois installé, c'est-à-dire en référence à la direction de la gravité.

Chacun des premier, deuxième et troisième portiques 13, 15, 17 comprend un premier et un deuxième montant 19, 21, et une traverse supérieure 23. La traverse supérieure 23 relie les premier et deuxième montants 19, 21, au niveau de leurs extrémités supérieures, c'est-à-dire leurs extrémités les plus éloignées du sol 12.

Comme représenté, les premier, deuxième et troisième portiques 13, 15, 17 peuvent également comprendre une traverse inférieure 24 extraplate, disposée sur le sol 12. La traverse inférieure 24 relie les premier et deuxième montants 19, 21 au niveau de leur extrémité inférieure, destinée à être en contact avec le sol 12. On entend par traverse extraplate une traverse ayant une épaisseur inférieure à 50 mm et de préférence comprise entre 30 mm et 40 mm. La traverse inférieure 24 permet une meilleur stabilité des portiques 13, 15, 17. Selon une variante, les premier et deuxième montants 19, 21 des portiques 13, 15, 17 pourraient être ancrés dans le sol.

Le système de contention 11 comprend, entre les premiers montants 19 des premier et deuxième portiques d'une part, et entre les premiers montants 19 des deuxième et troisième portiques 15, 17 d'autre part, une première paroi latérale 25 et une deuxième paroi latérale 29 respectivement. Les premiers montants 19 des premier, deuxième et troisième portiques 13, 15, 17 et les deuxième et deuxième parois latérales 25, 29 forment un premier côté 18 du couloir de passage.

Le système de contention comprend, entre les deuxièmes montants 21 des premier et deuxième portiques 13, 15 d'une part, et entre les deuxièmes montants 21 des deuxième et troisième portiques 15, 17 d'autre part, une troisième paroi latérale 27 et une quatrième paroi latérale 31 respectivement. Les deuxièmes montants 21 des premier, deuxième et troisième portiques 13, 15, 17 et les troisième et quatrième parois latérales 27, 31 forment un deuxième côté 20 du couloir de passage 16.

Ainsi, les première et troisième parois latérales 25, 27 sont montées sur les portiques 13, 15. Les première et troisième parois latérales 25, 27 sont espacées d'une première largeur l1. Les premier et deuxième portiques 13, 15 et les première et deuxième parois latérales forment ainsi une partie du couloir de passage 16 pour le bétail s'étendant selon la direction de déplacement DP.

Au moins la première paroi latérale 25, et de préférence les première et troisième parois latérales 25, 27 comme ici représenté, sont mobiles selon la largeur du couloir de passage 16, c'est-à-dire sensiblement perpendiculairement à la direction de déplacement DP, de façon à augmenter ou diminuer la largeur l1 en fonction de la corpulence des animaux devant emprunter le couloir de passage 16.

De la même manière, les deuxième et quatrième parois latérales 29, 31 sont montées sur les portiques 15, 17. Les deuxième et quatrième parois latérales 29, 31 sont espacées d'une deuxième largeur l2. Les deuxième et troisième portiques 15, 17 et les deuxième et quatrième parois latérales 29, 31 forment ainsi une partie du couloir de passage 16 pour le bétail s'étendant selon la direction de déplacement DP.

Au moins la deuxième paroi latérale 29 et de préférence les deuxième et quatrième parois latérales 29, 31 comme ici représenté, sont mobiles selon la largeur, de façon à augmenter ou diminuer la largeur l2 en fonction de la corpulence des animaux devant emprunter le couloir de passage 16.

Généralement, les largeurs l1 et l2 sont réglées de façon à qu'elles soient sensiblement identiques, afin que le couloir de passage 16 ait la même largeur sur l'ensemble de sa longueur. Toutefois, il pourrait être envisagé que les largeurs l1 et l2 soient différentes, par exemple de façon à former un entonnoir.

Dans l'exemple représenté, les largeurs l1 et l2 ne peuvent pas dépasser la distance entre les premier et deuxième montants 19, 21 des portiques 13, 15, 17.

Par exemple, la plus grande valeur de la largeur l1 et/ou de la largeur l2 est comprise entre 700 et 900 mm, de préférence entre 750 et 850 mm. Une plus grande valeur préférée de la largeur l1 et/ou de la largeur l2 est 790 mm.

Par exemple, la plus petite valeur de la largeur l1 et/ou de la largeur l2 est comprise entre 400 et 600 mm, de préférence entre 450 et 650 mm. Une plus petite valeur préférée valeur de la largeur l1 et/ou de la largeur l2 est 490 mm.

Le système de contention 11 sera décrit plus précisément ci-après, plus particulièrement en référence à l'ensemble comprenant la première paroi latérale 25 et les premier et deuxième portiques 13, 15. Bien entendu, cette description sera également applicable aux deuxième, troisième et quatrième parois latérales 27, 29, 31 et aux portiques sur lesquelles ces parois latérales sont montées.

La première paroi latérale 25 est montée, à l'une de ses extrémités selon la direction de déplacement DP, au premier portique 13 et à l'autre de ses extrémités selon la direction de déplacement DP, au deuxième portique 15.

La première paroi latérale 25 est montée sur les premier et deuxième portiques via un système de guidage 33. Chaque portique a, pour chacune des parois latérales qu'il supporte, un système de guidage. Les systèmes de guidage sont similaires. Le système de guidage 33 du deuxième portique 15 pour la première paroi latérale 25 sera décrit ci-dessous. Cette description est applicable aux autres systèmes de guidage.

Le système de guidage 33 comprend un rail 35, ici fixé sur la traverse 23 du deuxième portique 15. Le rail 35 définit une limite supérieure du couloir de passage 16. Le rail 35 s'étend, dans l'exemple représenté, sur toute la largeur du premier portique 15.

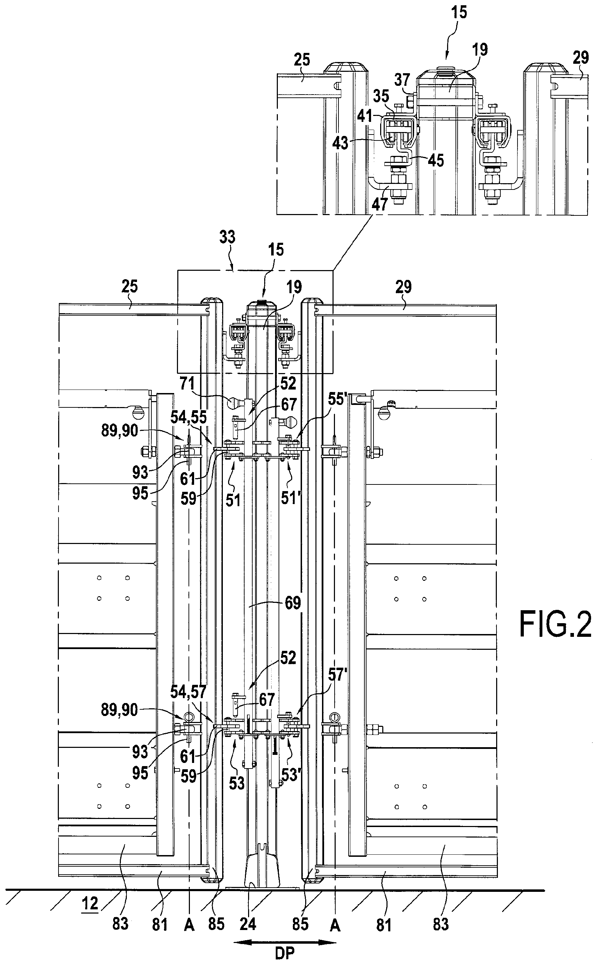

Comme représenté en figures 1 et 2, la première paroi latérale 25 est suspendue au rail 35 et est donc supportée par le rail 35 du deuxième portique 15 et par le rail 35 correspondant du premier portique 13.

La première paroi latérale 25 est reliée au rail 35 par un organe de coulissement 43 configuré pour coulisser sur le rail 35.

Par exemple, comme visible sur la figure 2, le rail 35 comprend une section creuse présentant une ouverture inférieure. Autrement dit, le rail 35 comprend une rainure en T débouchant en direction du sol 12.

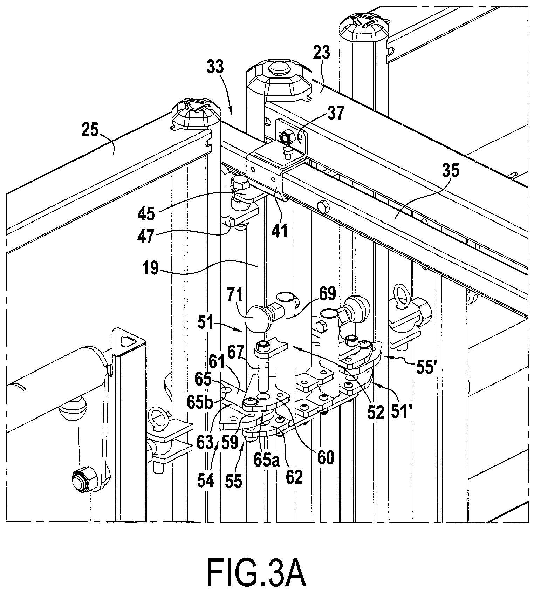

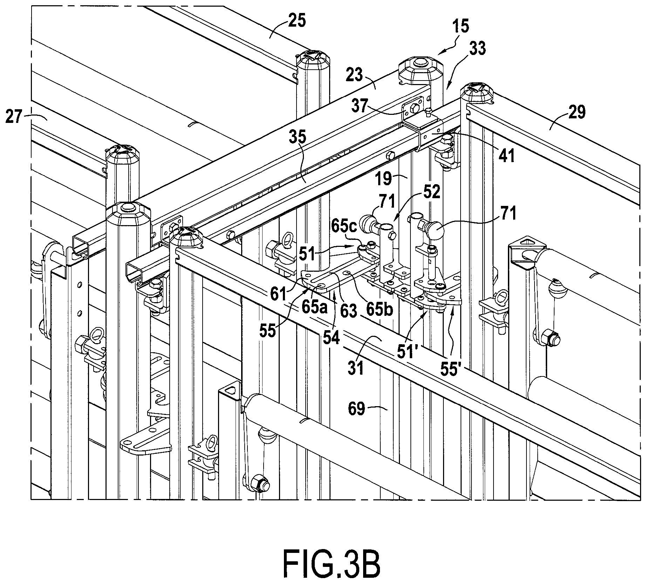

Comme représenté en figures 2, 3a et 3b, le rail est fixé à la traverse supérieure 23 grâce à des moyens de fixation comprenant, par exemple, une équerre 37 fixée d'une part à la traverse supérieure 23 et d'autre part au rail 35. Par exemple, les moyens de fixation peuvent comprendre en outre une pièce intermédiaire 41 entre l'équerre 37 et le rail 3. Par exemple, la pièce intermédiaire 41 est en forme de U, et est disposée autour du rail 35. Dans l'exemple représenté, la pièce intermédiaire 41 a la même forme que le rail 35, c'est-à-dire que la pièce intermédiaire 41 comprend une rainure en T, débouchant également en direction du sol 12. Toutefois, le rail 35 pourrait être fixé sur la traverse supérieure 23 par tout autre moyen, par exemple, le rail pourrait être soudé directement sur la traverse supérieure 23.

Le rail 35 est configuré pour recevoir, dans sa rainure en T, l'organe de coulissement 43. L'organe de coulissement 43 est relié à la première paroi latérale 25 par l'intermédiaire de moyens de fixation, comprenant par exemple une tige 45 traversant l'ouverture inférieure du rail 35, et étant reliée à la première paroi latérale 25. Par exemple, les moyens de fixation peuvent comprendre d'autres éléments comme ici une équerre 47, pour fixer la tige 45 à la première paroi latérale 25. L'organe de coulissement 43 pourrait être fixé à la première paroi latérale 25 par tout autre moyen.

L'organe de coulissement 43 peut se déplacer le long de la rainure en T du rail 35 et permet ainsi le coulissement de la première paroi latérale 25 par rapport au deuxième portique 15. L'organe de coulissement 43 peut comprendre tout type d'éléments permettant son coulissement dans le rail 35 comme un coulisseau, un galet ou une roulette. En l'espèce, l'organe de coulissement 43 comprend plusieurs roulettes, par exemple deux roulettes ou bien quatre roulettes.

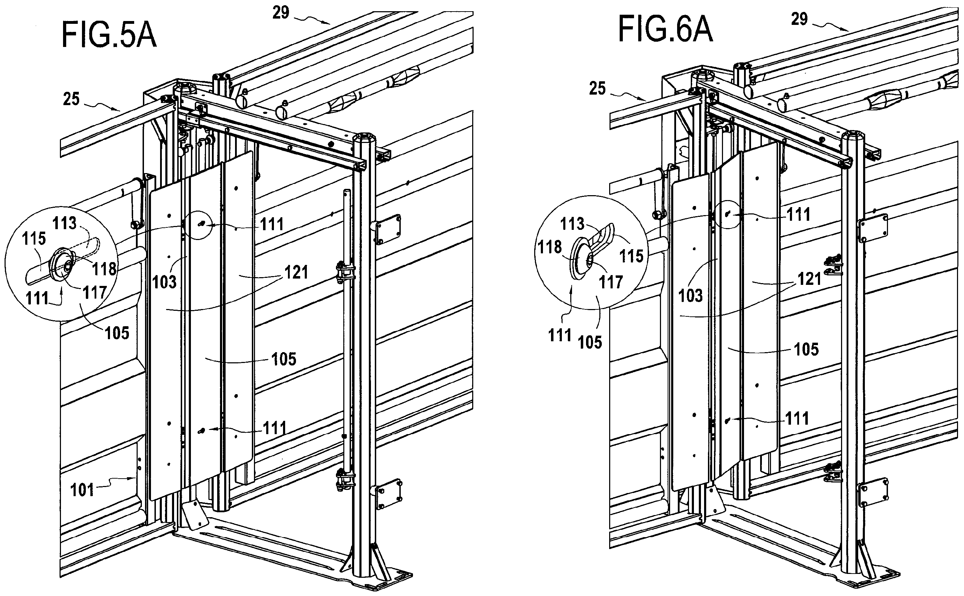

La troisième paroi latérale 27 est suspendue aux mêmes rails 35 que la première paroi latérale 25 au niveau des premier et deuxième portiques 13, 15, comme représenté en figure 3b et en figures 5a à 5c.

Dans cet exemple de réalisation, le système de guidage 33 de la première paroi latérale 25 au niveau du deuxième portique 15 comprend au moins un premier organe de maintien 51, fixé au premier montant 19, et configurés pour coopérer avec au moins un premier organe de coopération 55, fixé à la première paroi latérale 25, en face du premier organe de maintien 51.

De la même manière, le système de guidage 33 de la deuxième paroi latérale 29 au niveau du deuxième portique 15 comprend au moins un deuxième organe de maintien 51', fixé au premier montant 19, et configuré pour coopérer avec au moins un deuxième organe de coopération 55', fixé à la première paroi latérale 25, en face du premier organe de maintien 51.

Dans l'exemple représenté, le système de guidage 33 de la première paroi latérale 25 comprend le premier organe de maintien 51, dit premier organe de maintien supérieur, coopérant avec le premier organe de coopération 55 dit premier organe de coopération supérieur, et un premier organe de coopération 53 inférieur coopérant avec un premier organe de coopération 57 inférieur, disposé en face du premier organe de maintien 53 inférieur.

De la même manière, dans l'exemple représenté, le système de guidage 33 de la deuxième paroi latérale 29 comprend le deuxième organe de maintien 51', dit deuxième organe de maintien supérieur, coopérant avec le deuxième organe de coopération 55', dit deuxième organe de coopération supérieur, et un deuxième organe de maintien 53' inférieur coopérant avec un deuxième organe de coopération 57' inférieur, disposé en face du deuxième organe de maintien 53' inférieur.

Dans l'exemple représenté, les premiers organes de maintien et de coopération 51, 55 supérieurs sont disposés sensiblement à une même hauteur sur le montant 19 que les deuxièmes organes de maintien et de coopération 51', 55' supérieurs.

De la même manière, dans l'exemple représenté, les premiers organes de maintien et de coopération 53, 57 inférieurs sont disposés sensiblement à une même hauteur sur le montant 19 que les deuxièmes organes de maintien et de coopération 53', 57' inférieurs.

Les organes de maintien et de coopération 51, 55, 51', 55' supérieurs sont par exemple fixés environ aux 2/3 de la hauteur du premier montant 19 en partant du sol ; et les organes de maintien et de coopération 53, 57, 53', 57' inférieurs sont par exemple fixés environ aux 1/3 de la hauteur du premier montant 19 en partant du sol. Il est préférable que les organes de maintien et de coopération 51, 51', 53, 53', 55, 55', 57, 57' inférieurs et supérieurs soient disposés dans une portion correspondant aux 3/4 supérieurs du premier montant 19.

Les premiers organes de maintien et de coopération 51, 53, 55, 57 inférieurs et supérieurs sont décrits ci-dessous. Toutefois, cette description est applicable aux autres organes de maintien et de coopération d'autres systèmes de guidage 33.

Dans l'exemple de réalisation représenté, le système de guidage 33 comprend deux organes de maintien 51, 53 coopérant chacun avec un organe de coopération 55, 57 respectivement, mais dans d'autres exemples, le système de guidage 33 pourrait ne comprendre qu'un seul organe de maintien coopérant avec un organe de coopération. Selon une variante, le système de guidage 33 pourrait comprendre plus de deux organes de maintien coopérant chacun avec un organe de coopération.

Les organes de maintien 51, 53 peuvent supporter la première paroi latérale 25 avec le rail 35. Selon une variante, la première paroi latérale 25 est entièrement supportée par les rails 35 disposés au niveau des premier et deuxième portiques 13, 15.

Selon une autre variante, le système de contention 11 pourrait ne pas comprendre de rail, ainsi les parois latérales 25, 27, 29, 31 pourraient être montées sur les montants 19, 21 via les organes de maintien et de coopération 51, 53, 55, 57.

Dans l'exemple représenté, les organes de maintien 51, 53 et de coopération 55, 57 permettent principalement de retenir la première paroi latérale 25 dans un plan sensiblement normal à la direction de la largeur, perpendiculaire à la direction de déplacement DP, et ainsi de limiter son basculement.

Pour cela, chaque organe de maintien 51, 53 comprend une tige 59, parallèle au premier montant 19. La tige 59 est reliée au premier montant 19 par des éléments de fixation. Dans l'exemple représenté, la tige 59 s'étend sensiblement selon la verticale. Les éléments de fixation peuvent comprendre, comme représenté sur les figures 3a et 3b, deux plaques 60, 62 sensiblement horizontales fixées de part et d'autre de la tige 59. Les plaques 60, 62 sont fixées sur le premier montant 19.

Chaque organe de coopération 55, 57 comprend une lumière oblongue 63 ménagée chacune dans une platine 61 fixée à la première paroi latérale 25. La tige 59 est configurée pour être insérée au travers de la lumière oblongue 63. La lumière oblongue 63 et la tige 59 permettent de limiter la course de déplacement de la première paroi latérale 25, entre les deux extrémités de la lumière oblongue 63.

Le système de guidage 33 comprend en outre au moins un premier et au moins un deuxième organe de verrouillage 52, 54. Dans l'exemple représenté, le système de guidage 33 comprend deux organes de verrouillage supérieurs et deux organes de verrouillage inférieurs situés sensiblement aux mêmes positions, le long du premier montant 19, que les organes de maintien supérieur et inférieur 51, 53, respectivement, et les organes de coopération supérieur et inférieur 55, 57, respectivement. De manière similaire aux organes de maintien et de coopération 51, 53, 55, 57, selon des variantes, le système de guidage 33 pourrait ne comprendre qu'un premier organe de verrouillage et qu'un deuxième organe de verrouillage, ou bien plus de deux premiers et deuxièmes organes de verrouillage.

Les premiers et deuxièmes organes de verrouillage 52, 54 permettent de maintenir la première paroi latérale 25 dans une position correspondant à une première largeur l1 souhaitée. Dans l'exemple représenté, les premier et deuxième organes de verrouillage 52, 54 et les organes de maintien et de coopération 51, 53, 55, 57 peuvent être formés par les mêmes éléments. Par exemple, chacun des deuxièmes organes de verrouillage 54 comprend des trous 65 ménagés dans la platine 61 correspondant à différentes positions prédéterminées de la première paroi latérale 25, et donc à différentes premières largeurs l1 prédéterminées. Les trous 65 forment ici des éléments d'indexation 66 de la position de la première paroi latérale 25 par rapport au premier montant 19.

Chacun des premiers organes de verrouillage 52 comprend un doigt 67 configuré pour s'insérer dans l'un des trous 65 afin de maintenir la première paroi latérale 25 dans la position souhaitée. Le doigt 67 est monté mobile sur le premier montant 19, ici en translation selon la direction verticale, entre une position de verrouillage, dans laquelle il est inséré dans l'un des trous 65, et une position de déverrouillage, dans laquelle il n'est pas inséré dans l'un des trous 65. Des trous sont également ménagés dans les plaques 60, 62 de façon à laisser passer le doigt 67 pour qu'il puisse atteindre les trous 65. En outre, l'insertion du doigt 67 dans les trous des plaques 60, 62 permet d'améliorer la solidité de la liaison entre les premier et deuxième organes de verrouillage 52, 54.

Dans l'exemple représenté, afin de faciliter les opérations de verrouillage et de déverrouillage, les doigts 67 des premiers organes de verrouillage 52 sont fixés à une barre 69 mobile selon la direction verticale. La barre 69 comprend une poignée 71 disposée à son extrémité supérieure. Afin de permettre le déplacement de la barre 69, les plaques 60, 62 comprennent des évidements.

Ainsi, lorsque l'utilisateur tire sur la poignée vers le haut, les doigts 67 sortent des trous 65 où ils se trouvaient. La première paroi latérale 25 est ainsi déverrouillée et peut se déplacer, au maximum jusqu'à une extrémité où l'autre de chacune des lumières oblongues 63. Lorsque l'utilisateur souhaite verrouiller la position de la première paroi latérale 25, il déplace la première paroi latérale 25 de façon à ce que l'un des trous 65 de chaque deuxième organe de verrouillage 54 se trouve en face de chacun des doigts 67, puis, il abaisse la poignée 71 de façon à ce que les doigts 67 s'insèrent dans les trous 65. La position de la première paroi latérale 25 est ainsi maintenue et verrouillée. Bien entendu, l'utilisateur doit réaliser les mêmes actions sur le système de guidage 33 du premier portique 13 pour la première paroi latérale 25 pour pouvoir déplacer et verrouiller la position de la première paroi latérale 25.

Comme visible sur les figures 3a et 3b, la platine 61 comprend trois trous 65. Le trou 65a, dans lequel est inséré le doigt 67 sur la figure 3a, correspond à une première position extrême de la première paroi latérale 25, dans laquelle la première paroi latérale 25 se trouve au niveau du premier montant 19 selon la largeur, au plus éloignée de la deuxième paroi latérale 27. Le trou 65b correspond à une position intermédiaire de la première paroi latérale 25. Le trou 65c, dans lequel est inséré le doigt 67 sur la figure 3b, correspond à une deuxième position extrême de la première paroi latérale 25, au plus près de la deuxième paroi latérale 27 selon la largeur. Ici, les première et deuxième positions extrêmes correspondent également aux extrémités de la lumière oblongue 63, limitant le déplacement de première paroi latérale 25. Dans l'exemple représenté, les deuxièmes organes de verrouillage 54 ne comprennent que trois trous chacun et donc une seule position intermédiaire. Bien entendu, les deuxièmes organes de verrouillage 54 pourraient comprendre plus de trous et ainsi la première paroi latérale 25 pourrait occuper plus de positions intermédiaires.

Le maintien de la position de la première paroi latérale 25 pourrait être réalisé par tout autre moyen, indexé ou continu.

Afin de faciliter le déverrouillage de la première paroi latérale 25 du côté du premier portique 13 et du côté du deuxième portique 15 simultanément, les premiers organes de verrouillage 52 du côté du premier portique 13 et du côté du deuxième portique 15 peuvent comprendre un système d'ouverture centrale. Par exemple, les poignées 71 peuvent être reliées entre elles par un lien, tel qu'une corde. En actionnant le lien, par exemple en tirant dessus, l'utilisateur déverrouille simultanément les deux côtés de la première paroi latérale 25. Cela permet un gain de temps pour l'utilisateur.

Ainsi, grâce au système de guidage, l'utilisateur peut faire varier les largeurs l1 et l2 entre deux positions extrêmes, définie par les lumières oblongues 63, en poussant ou tirant les parois latérales 25, 27, 29, 31 selon la largeur. Dans l'exemple représenté, l'utilisateur peut déplacer les parois latérales 25, 27, 29, 31 manuellement. Dans une variante, le déplacement des parois latérales 25, 27, 29, 31 pourrait être motorisé.

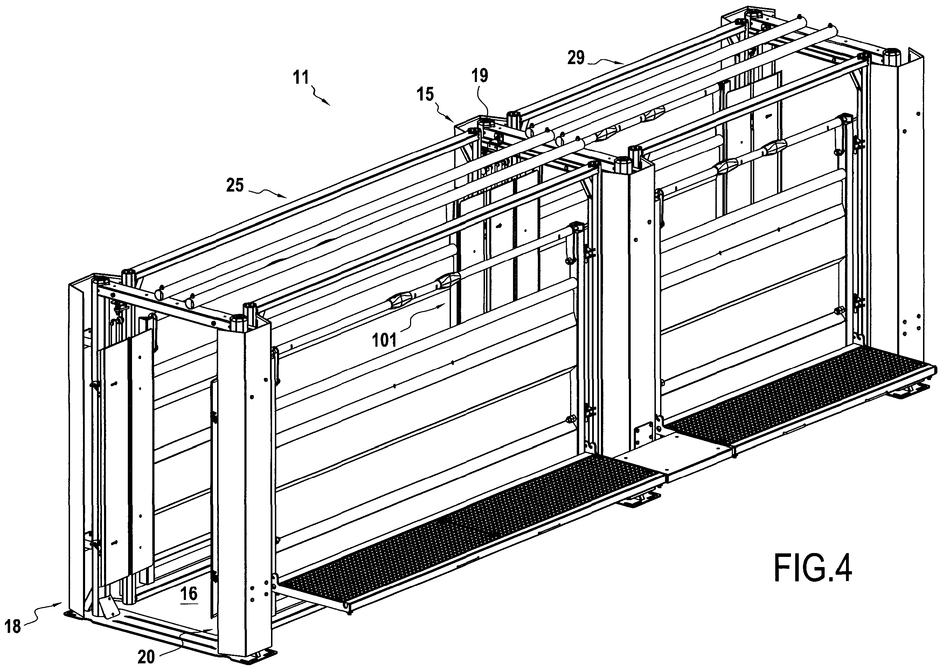

Toutefois, les organes de maintien, de coopération et de verrouillage 51, 51' 53, 53', 55, 55', 57, 57', 52, 54 comprennent une pluralité de petits éléments auxquels les animaux peuvent s'accrocher lors de leur passage dans le couloir de passage 16 et ainsi, se blesser. Comme représenté en figure 4, le système de contention 11 comprend donc un agencement de carter de protection 101, disposé à l'intérieur du couloir de passage 16 et configuré pour recouvrir au moins une partie des montants 19, 21 des portiques 13, 15, 17 et les éléments de maintien, de coopération et de verrouillage 51, 51' 53, 53', 55, 55', 57, 57', 52, 54 de façon à éviter le contact du bétail empruntant le couloir de passage 16 avec ces éléments. L'agencement de carter de protection 101 disposé au niveau du premier montant 19 du deuxième portique 15 est décrit ci-après. Bien entendu, cette description s'applique aux autres agencements de carter de protection, par exemple à l'agencement de carter de protection du deuxième montant 21 du deuxième portique 15.

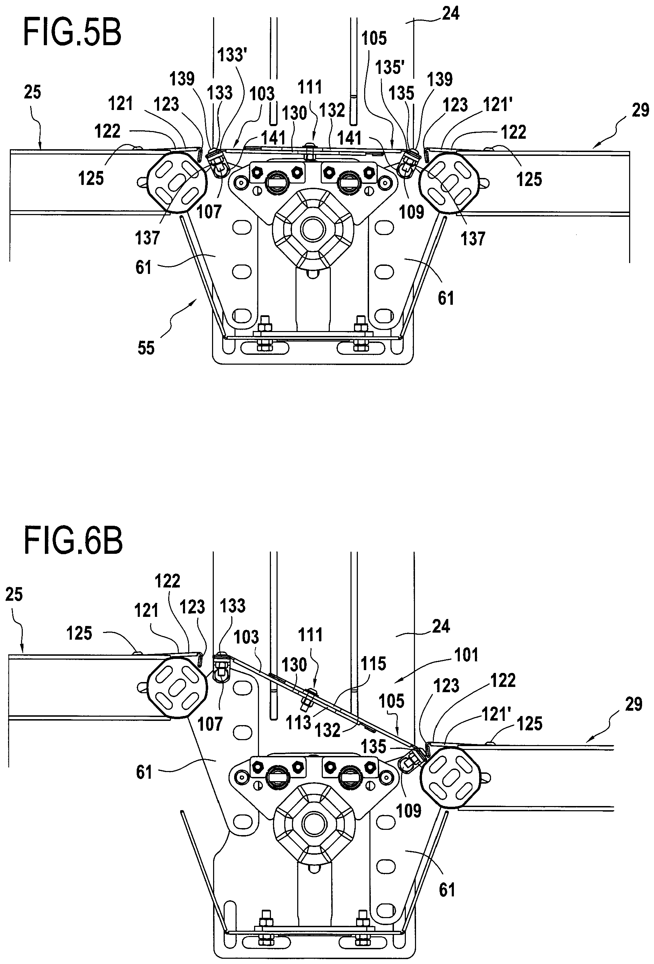

Dans l'exemple représenté en figure 5A, 5B, 6A, 6B, l'agencement de carter de protection 101 comprend une première et une deuxième portion 103, 105, ici un premier panneau 103 et un deuxième panneau 105. Le premier panneau 103 est relié à la première paroi latérale 25 via deux premières liaisons pivot 107 inférieure et supérieure. Dans l'exemple représenté, les premières liaisons pivot 107 inférieure et supérieure sont fixées sur la platine 61 des premiers organes de coopération inférieur et supérieur 55, 57.

Bien entendu, le premier panneau 103 pourrait être relié à la première paroi latérale 25 par une seule liaison pivot ou bien par plus de deux liaisons pivot.

De même, le deuxième panneau 105 est relié à la deuxième paroi latérale 29 via deux deuxièmes liaisons pivot 109 inférieure et supérieure. Dans l'exemple représenté, les deuxièmes liaisons pivot 109 inférieure et supérieure sont fixées sur la platine 61 des deuxièmes organes de coopération inférieur et supérieur 55', 57' respectivement, de la deuxième paroi latérale 29.

Bien entendu, le deuxième panneau 105 pourrait être relié à la deuxième paroi latérale 27 par une seule liaison pivot ou bien par plus de deux liaisons pivot.

Les premières et deuxièmes liaisons pivot 107, 109 permettent un mouvement de rotation des premier et deuxième panneaux 103, 105 respectivement autour d'un axe parallèle au montant 19 et de même direction que le montant 19.

Dans l'exemple représenté, chacun des premier et deuxième panneaux 103, 105 comprend une portion principale 130, 132, respectivement, sensiblement parallèle à la première paroi latérale 25 ou à la deuxième paroi latérale 29 respectivement, et une portion inclinée 133, 135, respectivement, par rapport à la première ou à la deuxième portion principale 130, 132 respectivement, vers l'extérieur du couloir de passage 16, lorsque les première et deuxième parois latérales 25, 29 sont sensiblement alignées. Les premières et deuxièmes liaisons pivot 107, 109 sont fixées aux portions inclinées 133, 135 des premier et deuxième panneaux 103, 105.

En l'espèce, chacune des liaisons pivot 107, 109 est formée par une équerre 137 fixée au premier ou au deuxième panneau 103, 105 respectivement via un élément de liaison 139 tel qu'une vis. La tête de vis de la vis fait ici saillie vers l'intérieur du couloir de passage 16 par rapport au premier ou au deuxième panneau 103, 105, respectivement, en l'espèce par rapport à la portion inclinée 133, 135 du premier ou du deuxième panneau 103, 105, respectivement. La tête de vis est arrondie de façon à éviter que les animaux ne se blessent. De manière générale, lorsque l'élément de fixation 139 comprend une portion saillante vers l'intérieur du couloir de passage 16 par rapport au premier ou au deuxième panneau 103, 105, respectivement, il est préférable que la portion saillante comprenne une surface lisse, c'est-à-dire sans arrête vive, de façon à éviter que les animaux ne se blessent en empruntant le couloir de passage 16. En outre, comme les portions saillantes sont ici disposées sur les portions inclinées 133, 135 respectivement, elles sont moins saillantes par rapport aux portions principales 130, 132, lorsque les première et deuxième parois latérales 25, 29 sont alignées. L'équerre 137 est en outre fixée à la platine 61 de l'organe de coopération 55, 55', 57, 57' respectivement, via un doigt 141 inséré dans un trou de l'équerre et dans un trou de la platine 61, permettant la rotation du premier ou du deuxième panneau 103, 105 respectivement. Bien entendu, les liaisons pivot 107, 109 pourraient être réalisées de toute autre manière connue de la personne du métier.

La portion inclinée 133 forme, avec la portion principale 130, un premier coude 133'. La portion inclinée 135 forme, avec la portion principale 132, un deuxième coude 135'. Selon une variante, chacun des coudes 133', 135' sont déformables, et ainsi, l'inclinaison des portions inclinées 133, 135 par rapport aux portions principales 130, 132 peut varier. Par exemple, les premier et deuxième panneaux 103, 105 ont une épaisseur plus faible au niveau de leur coude 133', 135', respectivement, que l'épaisseur des portions principales 130, 132. Les coudes 133', 135' peuvent ainsi se déformer élastiquement. Selon un autre exemple, les premier et deuxième panneaux 103, 105 comprennent une charnière au niveau de leur coude 133', 135'.

Comme visible sur les figures 5B et 6B, les premier et deuxième panneaux 103, 105 se chevauchent. Chacune des portions principales 130, 132 des panneaux 103, 105 a une épaisseur maximum d'environ 5 mm.

En outre, les premier et deuxième panneaux 103, 105 sont reliés et mobiles l'un par rapport à l'autre. En l'espèce, comme représenté en figures 5A, 5B, 6A et 6B, les premier et deuxième panneaux 103, 105 sont reliés par deux liaisons glissière 111, inférieure et supérieure. L'une des liaisons glissière 111 est décrite ci-après. Cette description s'applique également à l'autre liaison glissière 111. La liaison glissière 111 est formée par une première lumière oblongue 113 ménagée dans le premier panneau 103 et une deuxième lumière oblongue 105 ménagée dans le deuxième panneau 105. La liaison glissière 111 est en outre formée par un doigt 117, passant au travers des première et deuxième lumières oblongues 113, 115 de façon à relier les premier et deuxième panneaux 103, 105.

Le doigt 117 est maintenu dans les lumières oblongues 113, 115 via des éléments de retenue 118. L'un des éléments de retenue est saillant vers l'extérieur du couloir de passage 16 et l'autre élément de retenue est saillant vers l'intérieur du couloir de passage 16. De la même manière que les éléments saillants des éléments de fixation 139 des liaisons pivot 107, 109 vers l'intérieur du couloir de passage 16, l'élément de retenue 118 saillant a une surface lisse, c'est-à-dire sans arrête vive. Bien entendu, les liaisons glissière 111 pourraient être réalisées de toute autre manière connue de la personne du métier.

L'agencement de carter de protection 101 s'étend entre les première et deuxième parois latérales 25, 29 et est configuré pour couvrir le montant 19 ainsi que les éléments de maintien et de coopération 51, 51', 53, 53', 55, 55', 57, 57' de façon à éviter le contact des animaux empruntant le couloir de passage 16 avec ces éléments, quelques soient les valeurs des largeurs l1 et l2. Dans l'exemple représenté, l'agencement de carter de protection 101 s'étend au moins le long des 2/3 du montant 19.

Les figures 6A et 6B représentent une première configuration de la position de l'agencement de carter de protection, lorsque les première et deuxième parois latérales 25, 29 occupent la même position, c'est-à-dire lorsque les première et deuxième parois latérales 25, 29 sont sensiblement alignées selon la direction de déplacement DP. Dans l'exemple représenté, les première et deuxième parois 25, 29 occupent la première position extrême. Dans cette première configuration, les premier et deuxième panneaux 103, 105 s'étendent sensiblement selon la direction de déplacement DP. Dans la première configuration, les premier et deuxième panneaux 103, 105 se chevauchent sur une première distance, par exemple d'environ 150 à 300 mm. Dans cette configuration, comme représenté sur le grossissement de la liaison glissière en figure 5A, les première et deuxième lumières oblongues 113, 115 se chevauchent sur une distance minimale, correspondant environ, en l'espèce, au diamètre du doigt 117.

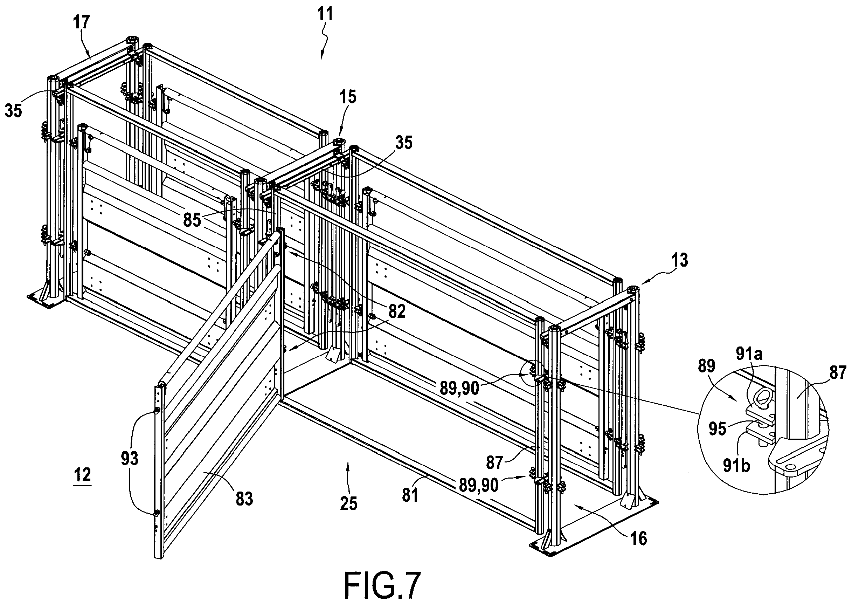

Par exemple, lorsque la première paroi latérale 25 est déplacée selon la largeur comme cela est représenté en figures 7A et 7B, l'agencement de carter de protection 101 est dans une deuxième configuration. En effet, l'agencement de carter de protection 101 suit le déplacement de la première paroi latérale 25, grâce aux liaisons pivot 107, 109 et glissière 111. Dans cette configuration, où la largeur l1 entre les première et troisième parois latérales 25, 27 est différente de la largeur l2 entre les deuxième et quatrième parois latérales 29, 31, les premier et deuxième panneaux 103, 105 s'étendent selon une direction inclinée par rapport à la direction de déplacement DP. Dans cette configuration, les premier et deuxième panneaux 103, 105 ont glissé l'un par rapport à l'autre, et se chevauchent sur une deuxième distance, plus faible que la première distance, par exemple d'environ 50 à 150 mm. Dans cette configuration, comme représenté sur le grossissement de la liaison glissière en figure 6A, les première et deuxième lumières oblongues 113, 115 ont glissé l'une par rapport à l'autre et se chevauchent sur une distance maximale, plus grande que dans la première configuration. En l'espèce, les lumières oblongues 113, 115 se trouvent sensiblement l'une en face de l'autre.

Ainsi, quelle que soit la position des parois latérales, les éléments blessants sont recouverts afin d'éviter que les animaux empruntant le couloir de passage 16 ne se blessent.

Dans l'exemple représenté, les premier et deuxième panneaux 103, 105 sont rigides et pleins. Toutefois, d'autres types de panneaux pourraient être adaptés. Par exemple, des panneaux ajourés, ou bien comprenant une partie grillagée pourraient convenir. Dans certains cas, des panneaux souples pourraient également convenir.

En outre, dans le cas où un animal chuterait ou serait agité, le système de contention 11 permet la sortie de l'animal du couloir de passage 16. En effet, comme représenté en figure 7, il est possible de dégager une ouverture de sortie du couloir de passage dans au moins l'une des parois latérales 25, 27, 29, 31, ici dans l'ensemble des parois latérales 25, 27, 29, 31. La description qui suit est réalisée en référence à la première paroi latérale 25 mais est applicable à l'ensemble des parois latérales 25, 27, 29, 31.

La première paroi latérale 25 comprend un cadre 81 et un ouvrant 83. L'ouvrant 83 est monté sur le cadre 81, pivotant autour d'un axe A vertical, formé par des liaisons pivots 82, ou des charnières, reliées à un premier côté 85 vertical du cadre 81. L'ouvrant 83 est ainsi apte pivoter par rapport au cadre 81 de façon à s'ouvrir pour dégager une ouverture de sortie latérale du cadre 81. Un deuxième côté 87 du cadre 81, opposé au premier côté 85 comprend deux éléments de verrouillage 89 de l'ouvrant 83, répartis le long du deuxième côté 87 du cadre 81. Les éléments de verrouillage 89 comprennent au moins deux languettes 91a, 91b définissant entre-elles un espace de réception d'un anneau de retenue 93 fixé à l'ouvrant 83. Les languettes 91a, 91b comprennent chacune un trou, les trous étant alignés avec le trou de l'anneau de retenue 93 lorsque l'ouvrant 83 est fermé. Les éléments de verrouillage 89 comprennent une tige 95, agencée pour s'insérer dans les trous des languettes 91a, 91b et de l'anneau de retenue 93 afin de verrouiller l'ouvrant 83 en position fermée. L'ouvrant 83 pourrait être verrouillé par tout autre moyen adapté.

Dans cet exemple, une fois les tiges 95 insérées dans les trous des languettes 91a, 91b, les éléments de verrouillage 89 forment des liaisons pivot 90 et peuvent donc former des charnières, permettant à l'ouvrant de pivoter autour d'un axe B, parallèle à l'axe A et s'étendant selon une même direction, ici la direction verticale.

Dans cet exemple, les liaisons pivots 82 du premier côté 85 sont équipées des mêmes éléments que les éléments de verrouillage 89, et peuvent donc également avoir la fonction d'élément de verrouillage, lorsque les liaisons pivot 90 sont utilisées comme charnières. Ainsi, l'ouvrant 83 peut être ouvert à partir de l'un ou l'autre des premier et deuxième côtés 85, 87 du cadre 81.

Les liaisons pivot 82, 90 sont également formées d'une pluralité de petits éléments auxquels les animaux peuvent s'accrocher lors de leur passage dans le couloir de passage et ainsi, se blesser. Comme représenté en figure 5, 6A, 6B, 7A, 7B, l'agencement de carter de protection 101 comprend en outre des bavettes 121 configurées pour recouvrir les liaisons pivot 82, 90, afin d'éviter que les animaux ne se blessent. Dans l'exemple représenté, une première bavette 121 est fixée à la première paroi latérale 25, et est, en l'espèce, fixe par rapport à la première paroi latérale 25. De la même manière, une deuxième bavette 121' est fixée à la deuxième paroi latérale 29, et est, en l'espèce, fixe par rapport à la deuxième paroi latérale 29.

La première bavette 121 disposée sur la première paroi latérale 25 à proximité du premier montant 19 du deuxième portique 15 sera décrite ci-après. Cette description est applicable à la deuxième bavette 121' ou aux autres bavettes du système de contention 11.

Dans l'exemple représenté, la bavette 121 est rigide et pleine. Toutefois, d'autres types de bavettes pourraient être adaptés. Par exemple, une bavette ajourée, ou bien comprenant une partie grillagée pourraient convenir. Dans certains cas, une bavette souple pourrait également convenir.

Dans l'exemple représenté, la bavette 121 est en forme de L. L'extrémité libre de la barre la plus grande du L 122 est fixée le long d'un montant vertical 82 de l'ouvrant 83 grâce à un élément de fixation 125, tel qu'une vis. L'élément de fixation 125 comprend une partie saillante vers l'intérieur du couloir de passage 16. De la même manière que pour les parties saillantes des éléments de fixation 138 des liaisons pivot 107, 109 et les éléments de retenue 118 saillants de la liaison glissière 111, la partie saillante de l'élément de fixation 125, ici, une tête de vis comprend une surface lisse, c'est-à-dire sans arrête vive.

L'autre extrémité de la barre la plus grande du L 122, reliée à la barre la plus petite du L 123, est disposée sensiblement dans le prolongement du premier panneau 103, au niveau du premier côté vertical 85 du cadre 81. Comme les premier et deuxième panneaux 103, 105 sont avancés par rapport aux première et deuxième parois 25, 29, dans la première configuration, la barre la plus grande du L 122 est légèrement inclinée par rapport à la première paroi latérale 25.

La barre la plus petite du L 123 de la bavette 121 s'étend vers l'extérieur du couloir de passage 16, vers le premier côté 85 du cadre 81.

Une partie de l'agencement de carter protection 101 étant la plus avancée ou en saillie dans le couloir de passage 116 selon la largeur est avancée par rapport à au moins la première paroi d'une distance maximum de 70 mm. Ainsi, la partie de l'agencement de carter de protection 101 la plus en saillie réduit la largeur du couloir de passage 16 de moins de 10%. Ainsi, la distance sur laquelle l'agencement de carter de protection 101 fait saillie est faible et négligeable par rapport à la largeur du couloir de passage 16 tout en évitant que les animaux empruntant le couloir de passage 16 ne se blessent.

Ainsi, l'agencement de carter de protection 101, présente une forme régulière et douce. L'intégration de l'agencement du carter de protection 101 dans le couloir de passage 16 est également douce, grâce aux bavettes 121, 121'.

Bien que la présente invention ait été décrite en se référant à des modes de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

## Revendications

1. Système de contention (11) pour bétail comprenant un couloir de passage (16) du bétail, le couloir de passage (16) comprenant un premier côté (18) et un deuxième côté (20) définissant entre eux une largeur du couloir de passage (16), au moins le premier côté (18) étant défini par :
- un montant (19) ;
- une première paroi latérale (25) et une deuxième paroi latérale (29) montées sur le montant (19) via des éléments de montage ; les première et deuxième parois latérales (25, 29) étant disposées de part et d'autre du montant (19) ; au moins la première paroi latérale (25) étant mobile selon la largeur du couloir de passage ;
au moins ledit premier côté étant en outre défini par un agencement de carter de protection (101) configuré pour recouvrir au moins partiellement le montant (19) et les éléments de montage à l'intérieur du couloir de passage (16),
**caractérisé en ce que** l'agencement de carter de protection (101) comprend au moins une première portion (103) reliée à la première paroi latérale (25) et une deuxième portion (105) reliée à la deuxième paroi latérale (29), les première et deuxième portions (103, 105) étant reliées et mobiles l'une par rapport à l'autre de sorte que l'agencement de carter de protection (101) est déformable de façon à accompagner le déplacement d'au moins la première paroi latérale (25) selon la largeur.

2. Système de contention selon la revendication 1, dans lequel l'agencement de carter de protection (101) est fixé d'une part à la première paroi latérale (25) et d'autre part à la deuxième paroi latérale (29).

3. Système de contention selon la revendication 1 ou 2, dans lequel une partie en saillie de l'agencement de carter de protection (101) étant la plus avancée selon la largeur vu de l'intérieur du couloir de passage (16) est avancée par rapport à au moins la première paroi d'une distance maximum de 70 mm, de préférence d'une distance maximum de 40 mm, dans une configuration dans laquelle les première et deuxième parois latérales (25, 29) sont alignées.

4. Système de contention selon l'une des revendications précédentes, dans lequel la première portion (103) est relié à la première paroi latérale (25) via une première liaison pivot (107) et la deuxième portion (105) est relié à la deuxième paroi latérale (29) via une deuxième liaison pivot (109).

5. Système de contention selon l'une des revendications précédentes, dans lequel les première et deuxième portions (103, 105) sont reliées par une liaison glissière (111).

6. Système de contention selon l'une des revendications précédentes, dans lequel l'agencement de carter de protection (101) s'étend au moins le long des 2/3 de la hauteur du montant (19).

7. Système de contention selon l'une des revendications précédentes, dans lequel la première paroi latérale (25) comprend un premier organe de coopération (55) configuré pour coopérer avec un premier organe de maintien (51) fixé au montant (19) ; et dans lequel la deuxième paroi latérale (29) comprend un deuxième organe de coopération (55') configuré pour coopérer avec un deuxième organe de maintien (51'), les organes de coopération et de maintien (51, 55, 51', 55') formant les éléments de montage, la première portion (103) étant reliée au premier organe de coopération (55) et la deuxième portion (105) étant reliée au deuxième organe de coopération (55').

8. Système de contention selon l'une des revendications précédentes, dans lequel l'agencement de carter de protection (101) comprend une bavette de protection (121) configurée pour recouvrir au moins partiellement au moins une partie d'au moins la première paroi latérale (25).

## Patentansprüche

1. Rückhaltesystem (11) für Vieh, das einen Durchgang (16) für das Vieh umfasst, wobei der Durchgang (16) eine erste Seite (18) und eine zweite Seite (20) umfasst, die zwischen einander eine Breite des Durchgangs (16) definieren, wobei zumindest die erste Seite (18) definiert ist durch:
- einen Pfosten (19),
- eine erste Seitenwand (25) und eine zweite Seitenwand (29), die über Montageelemente an dem Pfosten (19) montiert sind, wobei die erste und die zweite Seitenwand (25, 29) auf beiden Seiten des Pfostens (19) angeordnet sind, wobei zumindest die erste Seitenwand (25) entlang der Breite des Durchgangs beweglich ist,
wobei zumindest die erste Seite ferner durch eine Schutzgehäuseanordnung (101) definiert ist, die dazu ausgestaltet ist, den Pfosten (19) und die Montageelemente im Inneren des Durchgangs (16) zumindest teilweise zu bedecken,
**dadurch gekennzeichnet, dass** die Schutzgehäuseanordnung (101) mindestens eine erste Sektion (103), die mit der ersten Seitenwand (25) verbunden ist, und eine zweite Sektion (105) umfasst, die mit der zweiten Seitenwand (29) verbunden ist, wobei die erste und die zweite Sektion (103, 105) derart miteinander verbunden und in Bezug aufeinander beweglich sind, dass die Schutzgehäuseanordnung (101) derart verformbar ist, dass sie die Verlagerung von mindestens der ersten Seitenwand (25) entlang der Breite begleitet.

2. Rückhaltesystem nach Anspruch 1, wobei die Schutzgehäuseanordnung (101) einerseits an der ersten Seitenwand (25) und andererseits an der zweiten Seitenwand (29) befestigt ist.

3. Rückhaltesystem nach Anspruch 1 oder 2, wobei ein hervorstehender Teil der Schutzgehäuseanordnung (101), der von der Innenseite des Durchgangs (16) betrachtet entlang der Breite am weitesten hervorsteht, in einer Ausgestaltung, in der die erste und die zweite Seitenwand (25, 29) ausgerichtet sind, in Bezug auf zumindest die erste Wand um einen Höchstabstand von 70 mm, vorzugsweise um einen Höchstabstand von 40 mm, hervorsteht.

4. Rückhaltesystem nach einem der vorhergehenden Ansprüche, wobei die erste Sektion (103) über eine erste Drehverbindung (107) mit der ersten Seitenwand (25) verbunden ist und die zweite Sektion (105) über eine zweite Drehverbindung (109) mit der zweiten Seitenwand (29) verbunden ist.

5. Rückhaltesystem nach einem der vorhergehenden Ansprüche, wobei die erste und die zweite Sektion (103, 105) durch eine Gleitführungsverbindung (111) verbunden sind.

6. Rückhaltesystem nach einem der vorhergehenden Ansprüche, wobei die Schutzgehäuseanordnung (101) sich mindestens entlang von 2/3 der Höhe des Pfostens (19) erstreckt.

7. Rückhaltesystem nach einem der vorhergehenden Ansprüche, wobei die erste Seitenwand (25) ein erstes Zusammenwirkungsorgan (55) umfasst, das dazu ausgestaltet ist, mit einem ersten Halteorgan (51) zusammenzuwirken, das an dem Pfosten (19) befestigt ist, und wobei die zweite Seitenwand (29) ein zweites Zusammenwirkungsorgan (55') umfasst, das dazu ausgestaltet ist, mit einem zweiten Halteorgan (51') zusammenzuwirken, wobei die Zusammenwirkungs- und Halteorgane (51, 55, 51', 55') Montageelemente bilden, wobei die erste Sektion (103) mit dem ersten Zusammenwirkungsorgan (55) verbunden ist und die zweite Sektion (105) mit dem zweiten Zusammenwirkungsorgan (55') verbunden ist.

8. Rückhaltesystem nach einem der vorhergehenden Ansprüche, wobei die Schutzgehäuseanordnung (101) eine Schutzabdeckung (121) umfasst, die dazu ausgestaltet ist, zumindest einen Teil von zumindest der ersten Seitenwand (25) zumindest teilweise zu bedecken.

## Claims

1. A restraining system (11) for livestock comprising a passageway (16) for the livestock, the passageway (16) comprising a first side (18) and a second side (20) defining therebetween a width of the passageway (16), at least the first side (18) being defined by:
- a post (19);
- a first side wall (25) and a second side wall (29) mounted on the post (19) via mounting elements; the first and second side walls (25, 29) being disposed on either side of the post (19); at least the first side wall (25) being movable along the width of the passageway;
at least said first side being further defined by a protective casing arrangement (101) configured to at least partially cover the post (19) and the mounting elements inside the passageway (16),
**characterized in that** the protective casing arrangement (101) comprises at least a first portion (103) connected to the first side wall (25) and a second portion (105) connected to the second side wall (29), the first and second portions (103, 105) being connected and movable relative to each other so that the protective casing arrangement (101) is deformable so as to accompany the movement of at least the first side wall (25) depending on the width.

2. The restraining system according to claim 1, wherein the protective casing arrangement (101) is fixed on the one hand to the first side wall (25) and on the other hand to the second side wall (29).

3. The restraining system according to claim 1 or 2, wherein a protruding section of the protective casing arrangement (101) being the most advanced along the width viewed from inside the passageway (16) is advanced relative to at least the first wall by a maximum distance of 70 mm, preferably a maximum distance of 40 mm, in a configuration in which the first and second side walls (25, 29) are aligned.

4. The restraining system according to any of the preceding claims, wherein the first portion (103) is connected to the first side wall (25) via a first pivot connection (107) and the second portion (105) is connected to the second side wall (29) via a second pivot link (109).

5. The restraining system according to any of the preceding claims, wherein the first and second portions (103, 105) are connected by a sliding link (111).

6. The restraining system according to any of the preceding claims, wherein the protective casing arrangement (101) extends at least along 2/3 of the height of the post (19).

7. The restraining system according to any of the preceding claims, wherein the first side wall (25) comprises a first cooperation member (55) configured to cooperate with a first holding member (51) fixed to the post (19); and wherein the second side wall (29) comprises a second cooperation member (55') configured to cooperate with a second holding member (51'), the cooperation and holding members (51, 55, 51', 55') forming the mounting elements, the first portion (103) being connected to the first cooperation member (55) and the second portion (105) being connected to the second cooperation member (55').

8. The restraining system according to any of the preceding claims, wherein the protective casing arrangement (101) comprises a protective flap (121) configured to at least partially cover at least part of at least the first side wall (25).
